Europäisches Patentamt

European Patent Office

Office européen des brevets

(19)

(11) Veröffentlichungsnummer : **0 105 050**
**B1**

(12)                    **EUROPÄISCHE PATENTSCHRIFT**

(45) Veröffentlichungstag der Patentschrift :
04.03.87

(51) Int. Cl.⁴ : **F 16 C 32/06**

(21) Anmeldenummer : **82109060.2**

(22) Anmeldetag : **30.09.82**

(54) **Hydrostatische Lagerung.**

(43) Veröffentlichungstag der Anmeldung :
11.04.84 Patentblatt 84/15

(45) Bekanntmachung des Hinweises auf die Patenterteilung : 04.03.87 Patentblatt 87/10

(84) Benannte Vertragsstaaten :
AT CH DE FR GB IT LI SE

(56) Entgegenhaltungen :
AT-B-    356 473
DE-A- 2 153 989
DE-A- 2 252 495
DE-A- 2 326 666
DE-B- 1 072 863
FR-E-      56 050
SU-A-    616 455

(73) Patentinhaber : **Fürstlich Hohenzollernsche Hüttenverwaltung Laucherthal**

**D-7485 Sigmaringendorf-Laucherthal (DE)**

(72) Erfinder : **Eisenmann, Siegfried**
**Conchesstrasse 25**
**D-7960 Aulendorf (DE)**
Erfinder : **Rose, Siegfried**
**Stettiner Strasse 7**
**D-7485 Sigmaringendorf (DE)**

(74) Vertreter : **Schwabe, Hans-Georg, Dipl.-Ing. et al**
**Patentanwälte Schwabe, Sandmair, Marx Stuntzstrasse 16**
**D-8000 München 80 (DE)**

## Beschreibung

Die Erfindung betrifft ein hydrostatisches Lager nach dem Oberbegriff des Anspruchs 1. Bei derartigen Lagern dient als Druckflüssigkeit in der Regel ein geeignetes natürliches oder synthetisches Öl. Dies wird bei der Erfindung auch bevorzugt. Dem Grunde nach kann das Lager aber auch mit einer anderen Flüssigkeit, wie z. B. Luft, einem Gas oder Wasser, gespeist sein.

Bei hydrostatischen Lagern der genannten Art läuft das bewegte Lagerteil — meist eine Welle — ohne Berührung mit der tragenden Lagerfläche. Das bewegte Teil wird vielmehr ausschließlich von der Lagerflüssigkeit getragen, die unter ausreichend hohem Druck in die Lagertaschen eingespeist wird und durch den verbleibenden Lagerspalt unter Abfall auf den Umgebungsdruck zwischen der Tasche und dem Rand des Lagers abströmt. Wird das bewegte Teil in einer bestimmten Richtung aus der zentralen Lage abgelenkt, so steigt der Druck in der Lagertasche, auf welche das bewegte Teil zubewegt wurde, aufgrund der Verengung des Spaltes zwischen Lageroberfläche und bewegtem Teil an, während der Druck an der gegenüberliegenden Seite aufgrund der Vergrößerung des Lagerspaltes absinkt. Auf diese Weise wird schon bei einer sehr geringen Auslenkung das bewegte Teil wieder in die gewünschte Normallage zurückgeführt.

Die Erfindung ist überall da anwendbar, wo hydrostatische Lager verwendet werden können. Die Vorteile der Erfindung zeigen sich jedoch besonders bei hydrostatischen Lagern mit engem Lagerlaufspalt und hoher Relativgeschwindigkeit zwischen bewegtem Teil und lagerndem Teil.

Bei hydrostatischen Lagern sind die Dicke des Lagerspaltes, die Viskosität der Lagerflüssigkeit und die Relativgeschwindigkeit zwischen den bewegten Teilen des Lagers voneinander abhängig. Will man den Laufspalt klein und die Relativgeschwindigkeit groß halten, so ist man gezwungen, eine Flüssigkeit mit sehr niedriger Viskosität zu verwenden, da durch die in einem engen Lagerspalt bei hoher Geschwindigkeit auftretenden hohen Scherspannungen im Öl die Reibleistung im Lager sehr hoch wird, was wiederum die erforderliche Antriebsleistung unzulässig hoch werden läßt. Solange alle drei Werte (Relativgeschwindigkeit, Viskosität und Laufspaltgröße) zusammen bestimmte Mittelwerte nicht über- bzw. unterschreiten, treten keine Probleme auf. Schwierigkeiten entstehen jedoch insbesondere dann, wenn das Lager mit einer hohen Relativgeschwindigkeit gefahren werden soll. Dann muß, wie oben dargelegt, eine Flüssigkeit mit sehr niedriger Viskosität verwendet werden. Der Umweg der Verringerung der Relativgeschwindigkeit durch beispielsweise Verringerung des Lagerdurchmessers ist in der Regel nicht gangbar, weil die Tragfähigkeit und die Steifigkeit des Lagers dadurch zu sehr beeinträchtigt würden. Der Weg der Vergrößerung des Lager- oder Laufspaltes ist ebenfalls nicht gangbar, da mit zunehmender Laufspaltdicke die Dämpfung des Lagers stark abfällt, was bei den meisten Anwendungen von hydrostatischen Lagern, z. B. bei Werkzeugmaschinen, insbesondere dann, wenn sie der Feinstbearbeitung dienen, nicht zulässig oder höchst unerwünscht ist.

Der Absenkung der Viskosität der Lagerflüssigkeit sind jedoch Grenzen gesetzt, da bei Absenkung der Viskosität die laminare Strömung in der Vordrossel turbulent wird. Der bei laminarer Strömung lineare Zusammenhang zwischen der Druckdifferenz und der Durchflußmenge in der Vordrossel ist bei turbulenter Strömung nicht mehr vorhanden. Bei letzterer steigt der Druckabfall bei zunehmender Durchflußmenge in der Drosselstrecke überproportional an.

Die Strömung in der Vordrossel muß also unter allen Betriebszuständen des hydrostatischen Lagers laminar bleiben. In der Praxis würde nämlich eine turbulente Strömung in der Vordrossel zur Erregung von Druckpulsationen und damit von Schwingungen führen. Des weiteren würde die Lagerung weitgehend temperatur- und damit viskositätsabhängig werden, was ebenfalls unerwünscht ist. Solange die Strömung in der Vordrossel und dem Abflußspalt zwischen der Welle und der Lagertasche laminar ist, wird die Strömung durch die Viskosität kaum beeinflußt, so daß das Verhalten der hydrostatischen Lagerung weitgehend temperaturunabhängig ist.

Die Forderung nach laminarer Strömung im Laufspalt und der Vordrossel ist auch dadurch begründet, daß bei den üblichen hydrostatischen Lagern der Druck in den Lagertaschen stark drehzahlabhängig ist. Das im Laufspalt befindliche Öl wird nämlich durch die Relativgeschwindigkeit zwischen Welle und Lager einer hohen Scherbeanspruchung ausgesetzt. Diese führt wiederum zur Erwärmung des Öls und damit zu einem Absinken der Viskosität desselben, was zu einem erhöhten Abströmen des Öls aus den Lagertaschen führt. Demgegenüber wird das Öl in der Vordrossel nicht erwärmt, so daß dort die Ölviskosität nicht absinkt. Das führt bei zunehmender Drehzahl zum Abfallen des Taschendruckes und damit der Lagertragfähigkeit. Gleichzeitig kann dann wegen des abfallenden Taschendrucks und des damit verbundenen Anstieges der Druckdifferenz zwischen dem Pumpendruck und dem Taschendruck die Strömungsgeschwindigkeit in der Vordrossel so hoch ansteigen, daß sie turbulent wird. Das führt dann bei Überschreiten einer bestimmten Drehzahl zu einem Zusammenbruch der Tragfähigkeit des Lagers.

Als Konsequenz aus Obigem ergibt sich, daß die Strömung im Bereich von der Vordrossel bis zum Austritt aus dem Lagerspalt immer um einen erheblichen Sicherheitsabstand unterhalb der kritischen Reynoldsschen Zahl bleiben muß.

Dem sind jedoch bei den heute verwendeten Spaltdrosseln Grenzen gesetzt, da die Reynoldssche Zahl proportional dem Produkt aus der Strömungsgeschwindigkeit und der Spaltbreite und indirekt proportional der kinematischen Zähigkeit der Flüssigkeit ist.

Steigert man die Relativgeschwindigkeit im Lager zu stark, dann führt die hohe Reibleistung im Lager wegen der dadurch bedingten Erwärmung des Öls zu einer starken Absenkung der kinematischen Zähigkeit des Öls, so daß dieses sehr rasch aus der Lagertasche abströmt. Das fordert wiederum eine große Durchströmungsgeschwindigkeit in der Vordrossel, die wiederum zu einem Ansteigen der Reynoldszahl in den kritischen Bereich führen würde.

Unabhängig hiervon würde bei Erhöhung der Drehzahl über das Übliche hinaus der aufgrund der Erwärmung auftretende Druckabfall in den Lagertaschen die Erhöhung der Drehzahl verbieten.

Besonders vorteilhaft ist die spaltförmige Ausbildung der Vordrossel, da in die Reynoldssche Zahl für einen durchströmten Spalt nur dessen Dicke, nicht jedoch dessen Quererstreckung eingeht.

Im Hinblick auf die dargelegte Problematik wurde die den Gattungsbegriff des Anspruchs 1 bildende Konstruktion nach der SU-A-615 455 entwickelt, die es erlaubt, in einem hydrostatischen Lager — beim Hauptanwendungsgebiet der Erfindung, also bei hydrostatischen Radial- und Axiallager für Wellen und rotierende Teile die Umfangsgeschwindigkeit der Welle bzw. des rotierenden Teils — die mögliche relativgeschwindigkeit und/oder die Steifigkeit zu erhöhen bzw. den Lagerlaufspalt zu verringern, ohne daß die Gefahr eines Zusammenbrechens des Druckfeldes im Lagerspalt oder eine Verringerung der Präzision der Lagerung entsteht.

Bei dieser Konstruktion hat man für die Drosseln nicht nur ohne zusätzlichen Aufwand einen sehr engen, bis auf die Dicke weitgehend frei dimensionierbaren Spalt zur Verfügung. Es wird ferner erreicht, daß bei einer Verlagerung des im Lager drehbar oder verschiebbar gelagerten Teiles in Richtung auf die eine Lagertasche zu der Drosselspalt, der dieser Lagertasche gegenüber angeordnet ist, vergrößert wird, wodurch der Austrittsdruck der Vordrossel erhöht wird.

Gleichzeitig wird der Drosselspalt, der auf derselben Seite liegt wie die Lagertasche, verkleinert, wodurch der Austrittsdruck dort erniedrigt wird. Des weiteren wird durch die starke Scherspannung, der die Flüssigkeit im Lagerspalt bei hoher Drehzahl ausgesetzt wird, die Lagerflüssigkeit auch in der Vordrossel aufgeheizt, so daß hierdurch der Durchflußwiderstand in der Vordrossel aufgrund der Verminderung der Viskosität in erheblichem Maße sinkt. Diese Änderung bewirkt, daß der Durchflußwiderstand in der Vordrossel dem Durchflußwiderstand im Abflußspalt der Lagertasche weitgehend angepaßt wird. Weitere Vorteile der Konstruktion nach der genannten SU-A sind geringe Schwingungsanfälligkeit, hohe Steifigkeit und geringe Schmutz- und Toleranzempfindlichkeit.

Diese bekannte Konstruktion nach der SU-A-616 455 ist jedoch auch in verschiedener Hinsicht nachteilig. So erfolgt bei ihr die Zufuhr der Druckflüssigkeit durch die Welle. Eine Einspeisung der Flüssigkeit in die rotierende Welle bietet immer erhebliche Probleme. Darüberhinaus treten jedoch insbesondere dann, wenn die Welle mit hoher Drehzahl umläuft, aufgrund des Fliehkraftdruckes innerhalb der Welle Verfälschungen des Druckes in den Taschen auf, die von der Drehzahl abhängen. Ein weiterer Mangel dieser Konstruktion liegt darin, daß der Durchfluß durch den Drosselspalt bei höheren Umfangsgeschwindigkeiten der Welle von der Umfangsgeschwindigkeit abhängt. Das wird dadurch verursacht, daß wegen der konzentrischen Anordnung der kreisringförmigen Zu- und Abführnuten die Relativbewegung zwischen Welle und Lager bestrebt ist, die Druckflüssigkeit mit der Bewegung der Welle im feststehenden Lager in Richtung der Umfangsbewegung der Welle mitzunehmen.

Gegenüber dieser Konstruktion löst die Erfindung die Aufgabe, die Lagerung dahingehend weiterzubilden, daß auch bei hoher Spindeldrehzahl in der Größenordnung von 30 m pro Sec. und mehr und bei ausreichender Dämpfung des Lagers, was in jedem Fall von wesentlicher Bedeutung ist, nicht nur eine einwandfreie Zufuhr der Druckflüssigkeit zum Drosselspalt gewährleistet ist, sondern auch die Strömungsgeschwindigkeit im Drosselspalt weitgehend unabhängig von der Drehzahl gehalten wird. Dies wird durch das im neuen Anspruch 1 gekennzeichnete Prinzip erreicht.

Die Erfindung erreicht das durch die Ausbildung nach den kennzeichnenden Merkmalen des Anspruchs 1.

Auf diese Weise werden die dargelegten Mängel der gattungsbildenden Konstruktion beseitigt. Insbesondere wird die Vordrosselströmung dadurch, daß sie quer zur Bewegungsrichtung des Lagers verläuft, weitgehend unabhängig von der aufgrund der Lagerfunktion erzwungenen Bewegung der Lagerflüssigkeit.

Ist das Lager gemäß der Erfindung ein Radiallager, so liegen sich jeweils die Vordrosseln und die zugehörigen Lagertaschen in bezug auf die Lagerachse diametral gegenüber, so daß das rotierende Teil des Lagers stets genau in der Mitte des Lagers gehalten wird.

Ist das Lager ein doppelt wirkendes Axiallager, welches zwei im Abstand voneinander angeordnete Axiallagerflächen für ein in axialer Richtung zu fixierendes, rotierendes Teil aufweist, so liegen zweckmäßig die Vordrosseln und die zugehörigen Lagertaschen einander jeweils in dem Sinne gegenüber, daß jede Lagertasche in der einen Axiallagerfläche von einer Vordrossel in der anderen Axiallagerfläche gespeist wird, die mit der Lagertasche in einer Flucht parallel zur Drehachse des rotierenden Teiles liegt. Hierbei wechseln sich zweckmäßig dann in jeder Lagerfläche eine Drossel und eine Lagertasche ab, die durch entsprechende Axialbohrungen mit der gegenüberliegenden Lagerfläche verbunden sind.

Das Lager gemäß der Erfindung kann auch ein konisches Lager sein, welches sowohl in Axialrichtung als auch in Radialrichtung führt. Bei einer solchen Ausbildung liegen sich die Vordrosseln und die zugehörigen Lagertaschen vorteilhaft in bezug auf die Drehachse des rotierenden Teils diametral gegenüber.

Das Prinzip einer solchen konischen Lagerausbildung ist z. B. aus der AT-B-35 64 73 bekannt und läßt sich ohne weiteres auch gemäß der Erfindung ausgestalten.

Ist das Lager nach der Erfindung ein einseitig wirkendes Axiallager, wie es beispielsweise bei Wasserturbinen als Traglager für den um eine vertikale Achse rotierenden Rotor verwendet wird, ohne daß ein zweites gleichartiges Lager axial im Abstand gegenüber dem Lager angeordnet wäre, so werden die Lagertaschen und die zugehörigen Vordrosseln zweckmäßig in bezug auf die Drehachse des Lagers einander diametral gegenüber angeordnet.

Ist das Lager beispielsweise ein Führungslager für axial hin- und herbewegte, nicht rotierende prismatische Teile, so wird die Führung zweckmäßig nach den Grundsätzen für ein Radiallager ausgebildet.

Es versteht sich, daß im Regelfall die einander entgegenwirkenden Lagertaschen und zugehörigen Vordrosseln am besten gleich ausgebildet sind, da jede andere Ausbildung wesentlichen Aufwand mit sich bringen würde.

Die erforderlichen Verbindungsleitungen zwischen den Lagertaschen und den zugehörigen Vordrosseln bieten auch keine wesentlichen technischen Probleme. Bei doppelt wirkenden Axiallagern können diese Leitungen einfach von entsprechenden, parallel zur Drehachse des Lagers verlaufenden Bohrungen gebildet sein.

Bei Radiallagern verbinden vorteilhaft Radialbohrungen die Taschen und Vordrosseln mit Umfangsnuten eines inneren Lagerkörpers, die sich jeweils um den entsprechenden Umfangsteil dieses inneren Lagerkörpers erstrecken. Auf den inneren Lagerkörper ist dann eine Außenhülse aufgesetzt, die die Umfangsnuten radial nach außen schließt und entsprechende Zuleitungsbohrungen aufweist, die von der Speisepumpe zu den Vordrosseln führen. Bei dieser Konstruktion sind beispielsweise bei einem Viertaschenlager vier halb umlaufende Verbindungsnuten notwendig, wobei jeweils zwei davon in gleicher axialer Anordnung vorgesehen werden können.

Bevorzugt wird die Lagerfläche des Lagers nach der Erfindung mit einer relativ weichen Gleitlagerlegierung, wie z. B. einem Weißmetall beschichtet, damit ein großer Härteunterschied zwischen der Welle und der Lagerbohrung vorhanden ist und ferner ein hohes Maß an Schmutzeinbettungsfähigkeit gewährleistet ist. Diese weiche Lagermetallschicht hat vorzugsweise eine Dicke zwischen 0,5 und 1 mm.

Gemäß Anspruch 2 liegt bei einer bevorzugten Ausführungsform der Erfindung jede Abführnut zwischen zwei Zuführnuten. Diese Ausführungsform ist dann vorteilhaft, wenn die beiden äußeren Nuten so nah an einem freien Rand des Lagers oder einer Ablaufnut (vgl. Anspruch 6) liegen, daß bei Verwendung dieser Nuten als Abführnuten ein erheblicher Druckabfall aus den Abführnuten zum freien Rand des Lagers hin entstehen würde, was die Stabilität und Steifigkeit des Lagers negativ beeinflussen könnte. Bei der Anordnung gemäß Anspruch 2 tritt zwar ein Verlust an Lagerflüssigkeit von den unter Hochdruck liegenden Zuführnuten auf. Dieser Verlust ist jedoch tragbar und beeinträchtigt die Funktion des Lagers nicht.

Will man jedoch diesen höheren Verlust an Lagerflüssigkeit vermeiden, so wird gemäß Anspruch 3 bei einer anderen bevorzugten Ausführungsform der Erfindung jede Zuführnut zwischen zwei Abführnuten angeordnet. Diese Anordnung ist insbesondere dann von Vorteil, wenn ein erheblicher Abstand von den Abführnuten zu dem nächsten freien Rand des Lagers oder der nächsten Abführnut ist oder wenn durch eine entsprechende Ausbildung des Lagers, wie z. B. eine Ausbildung gemäß Anspruch 5, dafür Sorge getragen ist, daß der Druck in den Abführnuten von keiner Seite her angezapft wird.

Bevorzugt sind die Abführnuten jeweils in Bewegungsrichtung des Lagers länger als die Zuführnuten (vgl. Anspruch 4). Dadurch wird sichergestellt, daß der aufgrund der Lagerbewegung erzeugte Transport der Lagerflüssigkeit in Laufrichtung des Lagers nicht zu einem Vorbeiströmen eines Teils der Lagerflüssigkeit aus den Zuführnuten in störendem Umfang verhindert wird.

Bei den in der Regel zylindrischen Lagerungen haben die in sich zurücklaufenden, die Drucktaschen begrenzenden Nuten vorzugsweise Rechteckform. Bei einem Axiallager haben sie zweckmäßig die Form von Kreisringsektoren. Bei einem konischen Lager haben sie zweckmäßig die Form von Kegelstumpfmantelsektoren.

Ein besonderer Vorteil dieser Ausbildung liegt darin, daß die innerhalb der in sich geschlossenen Nut liegende Lagerfläche eine Dämpfung eventueller Schwingungen des rotierenden Körpers und Druckpulsationen der Lagerflüssigkeit bewirkt, wodurch die dynamische Dämpfung des Lagers erhöht wird. Zwar steigt wegen der größeren Kontaktflächen die Viskositätsreibleistung etwa an. Dieser Einfluß ist jedoch wegen der Möglichkeit, besonders dünnflüssige Öle verwenden zu können, leicht in Kauf zu nehmen.

Das Lager nach der Erfindung ist natürlich nicht nur für besonders hohe Drehzahlen geeignet. Auch bei nicht zu hohen Drehzahlen zeigt es sich insbesondere dann als vorteilhaft, wenn der Lagerspalt sehr eng ist. Auch wenn dieses nicht der Fall ist, ist eine Lagerausbildung nach der Erfindung normalerweise steifer als eine solche nach dem Stand der Technik.

Nachfolgend ist die Erfindung anhand eines in den Zeichnungen schematisch dargestellten vorteilhaften Ausführungsbeispiels der Erfindung näher erläutert.

Figur 1 zeigt ein gemäß der Erfindung ausgebildetes Radiallager nach der Erfindung im Axial-Schnitt I-I aus Fig. 2.

Figur 2 zeigt das Lager gemäß Fig. 1 im Schnitt II-II aus Fig. 1.

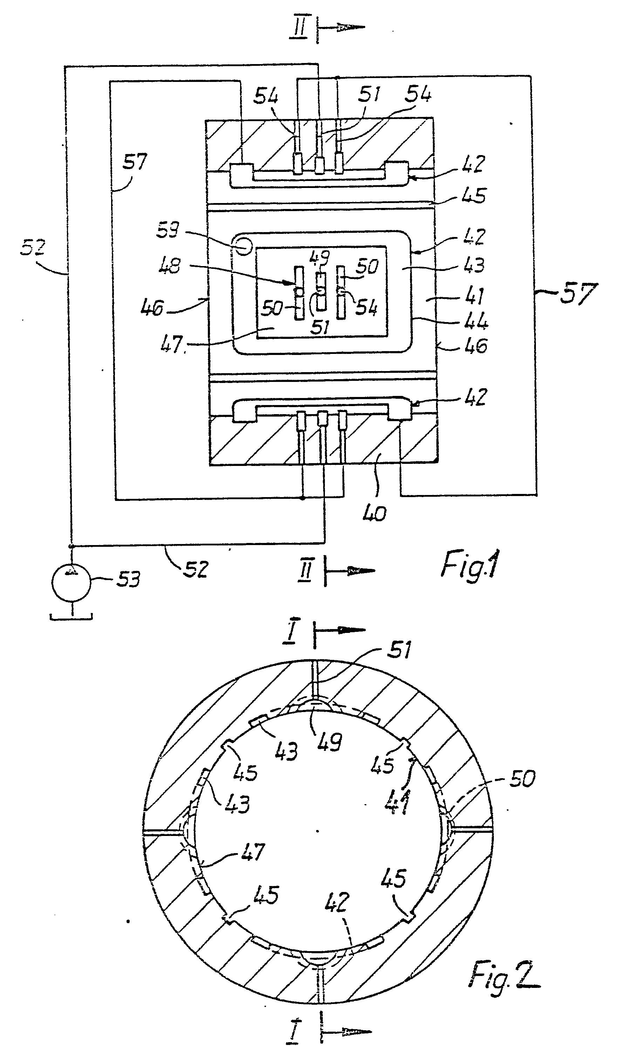

Das in Fig. 1 und 2 schematisch gezeigte Radiallager besteht im Prinzip aus einem im Ausführungsbeispiel schematisch nur als Zylinderring dargestellten Lagerkörper 40 aus Stahl oder einer Lagerbronze, dessen innere Lauffläche 41 mit einer Weißmetallagerschicht ausgekleidet ist. In der von der Lagerfläche 2 gebildeten Lagerbohrung läuft eine nicht gezeigte Welle mit einem Lagerspalt von beispielsweise 0,7 Promille des Wellendurchmessers. Die Welle ist glatt zylindrisch.

Die Welle oder der im Lager rotierende Körper wird dadurch genau in konzentrischer Flucht mit der Lagerbohrung 41 gehalten, daß bei geringem seitlichen Auswandern der Welle der Lagerspalt im Bereich der Drucktasche, auf die die Welle sich zubewegt, verengt wird, so daß das Öl aus der Drucktasche nur noch durch einen engeren Spalt abströmen kann, wodurch der Druck in der Drucktasche wächst und eine auf Rückstellung der Welle in die Ausgangslage gerichtete zusätzliche Radialkraft entsteht. Umgekehrt sinkt wegen Vergrößerung des Abflußspalts der Druck in der Lagertasche, von der die Welle wegbewegt wird, was im gleichen Sinne wirkt.

Dadurch, daß der Drosselspalt durch den Lagerspalt gegenüber der vom Drosselspalt beaufschlagten Drucktasche gebildet ist, wird ferner beim Abweichen der Welle von der zentralen Lage zur Drucktasche hin der Druckabfall im Drosselspalt verringert, so daß eine besonders starke Rückstellkraft entsteht. Weicht die Welle von der Drucktasche weg, so wird der Druckabfall in dem zugehörigen Drosselspalt besonders groß, was den Druck in der Drucktasche verringert und das Zurückweichen der Welle zur Drucktasche hin fördert.

Das Lager eignet sich besonders für sehr hohe Drehzahlen, beispielsweise für schnellaufende Arbeitsspindeln von Werkzeugmaschinen und/oder die Auslegung mit sehr engem Lagerspalt.

Das Lager besitzt vier gleichmäßig über den Umfang verteilte rechteckige Lagertaschen 42. Diese Lagertaschen werden von ringförmig in sich zurücklaufenden Nuten 43 in der Lagerfläche 41 gebildet. Die äußeren Ränder 44 der Nuten definieren auf diese Weise den Umfang der Lagertaschen. Zwischen den Lagertaschen in Umfangsrichtung jeweils in gleichem Abstand von diesen sind vier Ablaufnuten 45 vorgesehen durch welche das in Umfangsrichtung aus den Lagertaschen abströmende Drucköl praktisch drucklos ins Freie strömen kann, so daß es nicht unnötig aufgeheizt wird. Der Abstand der äußeren Ränder 44 der Lagertaschen von den jeweils benachbarten Ablaufnuten 45 und von den freien Rändern 46 des Lagers ist gleich, so daß insoweit überall der gleiche Druckabfall entsteht.

Wenn in dem gezeigten Lager die Wärmeentwicklung nicht zu groß ist, können die Druckablaufnuten 14 auch weggelassen werden.

Wie gesagt sind die Lagertaschen nicht als flächige Vertiefungen ausgeführt. Das von der Nut 43 jeweils umlaufende Feld 47 liegt vielmehr auf einem Niveau mit der Lagerfläche 41. Auf diese Weise kann in der Mitte des Feldes 47 jeweils die Vordrossel 48 für die gegenüberliegende Drucktasche 42 angeordnet werden. Die Vordrossel ist eine Spaltdrossel, d. h. in ihr wird der erforderliche Druckabfall dadurch erzeugt, daß das Lageröl durch einen Spalt sehr geringer Dicke, aber mit relativ großer Quererstreckung hindurchtritt.

Im Ausführungsbeispiel ist jede Vordrossel 48 als mit einer halbmondförmig eingetieften Zuführnut 49 und zwei im gleichen Abstand seitlich von dieser verlaufenden, etwas längeren Abführnuten 50 versehen dargestellt. In der Praxis wird man bei dieser Ausführung meist jedoch mehr als nur eine Zuführnut vorsehen. Dementsprechend muß die Zahl der Abführnuten um eins größer sein als die der Zuführnuten, damit, wie dies hier bevorzugt wird, jede Zuführnut zwischen zwei Abführnuten angeordnet sein kann. Die Nuten 49 und 50 verlaufen in Bewegungsrichtung des Lagers, also in Umfangsrichtung. Da das Lager sowohl für Rechtslauf als auch für Linkslauf ausgelegt ist, überragen die Abführnuten 50 die Zuführnut 49 in beiden Richtungen, wie dies in der Zeichnung dargestellt ist, so daß der Querstrom von der Zuführnut 49 zu den beiden Abführnuten 50 trotz der durch die Lagerbewegung aufgezwungenen Umfangskomponente der Strömung vollständig oder wenigstens angenähert vollständig aufgenommen werden kann.

Der Druck in der Lagertasche 42 wird durch die in der Mitte derselben angeordnete Vordrossel für die gegenüberliegende Drucktasche nur wenig beeinflußt. Im Ausführungsbeispiel entstehen im wesentlichen zwei trapezförmige Druckfelder, deren eines sich von der Zuführnut 49 zur linken Abführnut 50 erstreckt, während das andere von der Zuführnut 49 zur rechten Abführnut 50 erstreckt. Im Bereich der Zuführnut 49 herrscht noch der ungedrosselte Pumpendruck, während im Bereich der Nut 50 der Druck bereits gedrosselt ist. Diese geringe Krafterhöhung wird durch die gegenüberliegende Vordrossel kompensiert. Die vier Zuführnuten 49 sind über Radialbohrungen 51 mit nur schematisch gezeichneten Zuführleitungen 52 mit der Pumpe 53 verbunden.

Die Abführnuten 50 sind über Radialbohrungen 54 mit nur schematisch angedeuteten Abführleitungen 57 verbunden, welche das Öl aus den Vordrosseln 48 über Radialbohrungen 59 den gegenüberliegenden Rechtecknuten 43 zuführen.

Die Zuführbohrungen 59 münden jeweils in einer Ecke der entsprechenden Rechtecknut 43, um die Zahl der Umlenkungen für den gedrosselten Ölstrom möglichst niedrig zu halten.

**Patentansprüche**

1. Hydrostatische Lagerung mit folgenden Merkmalen :

a) Im Lagerspalt ist gleichmäßig über den Umfang verteilt eine gerade Zahl von Drucktaschen (42) angeordnet, die als in sich zurücklaufende Vertiefungen (43) ausgebildet sind.

b) Die Vordrosseln (48) für die Lagertaschen (43) sind vom Lagerspalt innerhalb der die gegenüberliegende Lagertasche (42) bildenden Vertiefung (43) gebildet.

c) Die die Vordrosseln bildenden Bereiche des Lagerspalts werden jeweils in Durchströmungsrichtung von Zufuhrnuten (49) und Abführnuten (50) begrenzt, die über Zufuhrleitungen (51) mit der Druckflüssigkeitsquelle (53) bzw. über Abführleitungen (54) mit der gegenüberliegenden Tasche (54) in Verbindung stehen. gekennzeichnet durch folgende Merkmale :

d) Die Lagertaschen (43) sowie die Zu- und Abführnuten (49, 50) und die Zu- und Abführleitungen (51, 54) sind im feststehenden Lagerteil (40) ausgespart.

e) Die Zu- und Abführnuten (49, 50) erstrecken sich in Bewegungsrichtung des Lagers.

2. Lager nach Anspruch 1, dadurch gekennzeichnet, daß jede Abführnut (68) zwischen zwei Zufuhrnuten (66) sitzt.

3. Lager nach Anspruch 1, dadurch gekennzeichnet, daß jede Zufuhrnut (49) zwischen zwei Abführnuten (50) sitzt.

4. Lager nach einem der Ansprüche 1 bis 3, dadurch gekennzeichnet, daß die Abführnuten (50, 68) jeweils in Bewegungsrichtung des Lagers länger sind als die Zufuhrnuten (49, 66).

5. Lager nach einem der Ansprüche 1 bis 4, dadurch gekennzeichnet, daß die die Drucktaschen bildenden Vertiefungen Nuten (43) sind, die längs des Umfangs eines Rechtecks verlaufen, das zwei parallel zur Bewegungsrichtung des Lagers verlaufende Seiten besitzt.

6. Lager nach einem der Ansprüche 1 bis 5, dadurch gekennzeichnet, daß in Bewegungsrichtung des Lagers zwischen den Drucktaschen drucklose, quer zur Bewegungsrichtung des Lagers verlaufende Ablaufnuten (45) im Abstand von den Drucktaschen verlaufen.

## Claims

1. A hydrostatic bearing arrangement having the following features :

a) Distributed uniformly over the circumference in the bearing gap is an even number of pressure pockets (42) which are constructed in the form of recesses (43) running back into themselves.

b) The supply restrictors (48) for the bearing pockets (43) are formed by the bearing gap inside the recess (43) forming the opposite bearing pocket (42).

c) The regions of the bearing gap forming the supply restrictors are each bounded, in the direction of flow through, by inlet grooves (49) and outlet grooves (50) which are in communication respectively with the source of pressure fluid (53) through supply conduits (51) and with the opposite pocket (54) through discharge conduits (54),

characterised by the following features :

d) The bearing pockets (43) as well as the inlet and outlet grooves (49, 50) and the supply and discharge conduits (51, 54) are hollowed out of the stationary bearing member (40).

e) The inlet and outlet grooves (49, 50) extend in the direction of movement of the bearing.

2. A bearing as claimed in claim 1, characterised in that each outlet groove (68) is situated between two inlet grooves (66).

3. A bearing as claimed in claim 1, characterised in that each inlet groove (49) is situated between two outlet grooves (50).

4. A bearing as claimed in one of the claims 1 to 3, characterised in that the outlet grooves (50, 68) are each longer, in the direction of movement of the bearing than the inlet grooves (49, 66).

5. A bearing as claimed in one of the claims 1 to 4, characterised in that the recesses forming the pressure pockets are grooves (43) which extend along the circumference of a rectangle which has two sides extending parallel to the direction of movement of the bearing.

6. A bearing as claimed in one of the claims 1 to 5, characterised in that pressureless discharge grooves (45) extend between the pressure pockets in the direction of movement of the bearing, with spacing from the pressure pockets.

## Revendications

1. Palier hydrostatique présentant les caractéristiques suivantes :

a) Dans le jeu du palier, un nombre pair de poches de pression (42) conformées en tant que dépressions (43) fermées sur elles-mêmes sont disposées de manière uniformément répartie sur la circonférence ;

b) Les étranglements primaires (48) pour les poches de palier (43) sont constitués par le jeu de palier, à l'intérieur de la dépression (43) formant la poche de palier opposée (42) ;

c) Les régions du jeu de palier formant les étranglements primaires sont limitées respectivement, dans le sens de l'écoulement, par des rainures d'évacuation (50) qui communiquent, par l'intermédiaire de conduits d'amenée (51), avec la source de fluide sous pression (53) et, par l'intermédiaire de conduits d'évacuation (54), avec la poche opposée (54) ;

caractérisé en ce que :

d) Les poches de palier (43) ainsi que les rainures d'arrivée et d'évacuation (49, 50) et les conduits d'arrivée et d'évacuation (51, 54) sont réalisées dans la partie fixe (40) du palier, et que

e) les rainures d'arrivée et d'évacuation (49, 50) s'étendent dans le sens du mouvement du palier.

2. Palier selon la revendication 1, caractérisé en ce que chaque rainure d'évacuation (68) est située entre deux rainures d'arrivée (66).

3. Palier selon la revendication 1, caractérisé en ce que chaque rainure d'arrivée (49) est placée entre deux rainures d'évacuation (50).

4. Palier selon l'une des revendications 1 à 3, caractérisé en ce que, vu dans le sens du mouvement du palier, les rainures d'évacuation (50, 68) sont respectivement plus longues que les rainures d'arrivée (49, 66).

5. Palier selon l'une des revendications 1 à 4, caractérisée en ce que les dépressions formant les poches de pression constituent des rainures (43) qui s'étendent le long de la périphérie d'un rectangle lequel présente deux côtés orientés parallèlement à la direction de mouvement du palier.

6. Palier selon l'une des revendications 1 à 5, caractérisé en ce que, vu dans le sens du mouvement du palier, des rainures d'évacuation (45) sans pression sont disposées, transversalement à la direction de mouvement du palier, entre les poches de pression et à distance de celles-ci.

Fig.1

Fig.2